# EUROPEAN PATENT APPLICATION

(11) **EP 2 549 363 A2**
(43) Date of publication of application: **23.01.2013**
(21) Application number: 12177188.5
(22) Date of filing: 19.07.2012
(51) Int. Cl.: G06F 3/023, G06F 17/30, G06F 3/048

(54) **Apparatus and method for character input through a scroll bar in a mobile device**

(30) Priority: 22.07.2011 US 201161510575 P; 22.11.2011 US 201113302792
(71) Applicant: Samsung Electronics Co., Ltd., Suwon-si, Gyeonggi-do, 443-742 (KR)
(72) Inventor: Voonna, Thirumalarao, Somerset County, NJ 08873 (US)
(74) Representative: Harrison Goddard Foote

(57) **Abstract**

An apparatus includes a touchscreen and a controller operably connected to the touchscreen. The controller is configured to detect a gesture input using the touchscreen, identify a character associated with the gesture, include the character in a set of characters to be displayed in a search bar on the touchscreen, and organize a list of content based on the set of characters.

## Description

### TECHNICAL FIELD

The present application relates generally to mobile device inputs and, more specifically, to a character inputs using a scroll bar.

### BACKGROUND

In the current market, smart phone contacts applications do not provide a simple user interface where a user can search for a contact without inputting characters from a keyboard. Current contacts application scroll bars only allow the user to select a first character of a contacts first or last name. After the first character is selected, user has to scroll through contacts one by one to select a desired contact. This method requires the user to put more attention to interact with the user interface.

Therefore, there is a need in the art for an improved user interface. In particular, there is a need for a user interface that is capable of simplifying contact selection.

### SUMMARY

In an exemplary embodiment, an apparatus includes a touchscreen and a controller operably connected to the touchscreen. The controller is configured to detect a gesture input using the touchscreen, identify a character associated with the gesture, include the character in a set of characters to be displayed in a search bar on the touchscreen, and organize a list of content based on the set of characters.

In another exemplary embodiment, a method for character input using a scroll bar is provided. The method includes detecting a gesture input using a touchscreen, identifying a character associated with the gesture, including the character in a set of characters to be displayed in a search bar on the touchscreen, and organizing a list of content based on the set of characters.

In yet another exemplary embodiment, a mobile device for use in a wireless communications network is provided. The mobile device includes a touchscreen, a storage device configured to store an application and a list of content associated with the application, and a controller operably connected to the touchscreen and the storage device. The controller is configured to receive the list of content in response to a request to access the application, detect a gesture input using the touchscreen, identify a character associated with the gesture, include the character in a set of characters to be displayed in a search bar on the touchscreen, and organize the list of content based on the set of characters.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; the term "set" with reference to a item, means one or more items; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an example of a mobile station according to the present disclosure;

FIGURE 2 illustrates an example of a mobile device having a scroll bar according to the present disclosure; and

FIGURE 3 illustrates a process for character input using a scroll bar according to the present disclosure.

### DETAILED DESCRIPTION

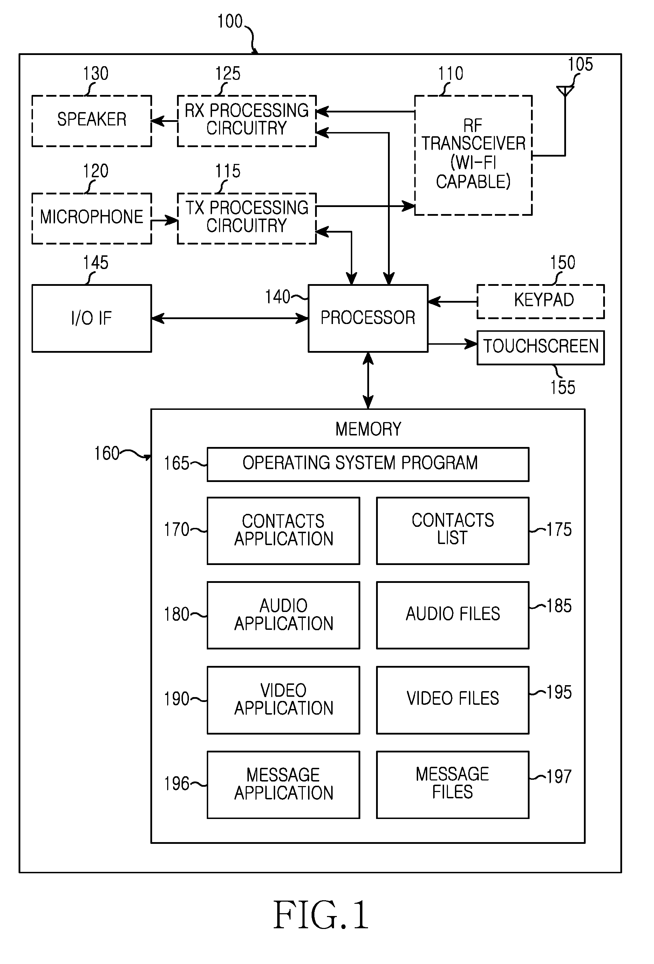

FIGURES 1 through 3, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged computing device.

FIGURE 1 illustrates mobile station 100 according to an advantageous embodiment of the present disclosure. Mobile station 100 comprises antenna 105, radio frequency (RF) transceiver 110, transmit (TX) processing circuitry 115, microphone 120, and receive (RX) processing circuitry 125. Mobile station 100 also comprises speaker 130, processor 140, input/output (I/O) interface (IF) 145, keypad 150, touchscreen 155, and memory 160. Memory 160 further comprises basic operating system (OS) program 165.

Radio frequency transceiver 110 receives from antenna 105 an incoming RF signal transmitted by a base station of a wireless network. Radio frequency transceiver 110 down-converts the incoming RF signal to produce an intermediate frequency (IF) or a baseband signal. The IF or baseband signal is sent to receiver (RX) processing circuitry 125, which produces a processed baseband signal by filtering, digitizing the baseband or IF signal, additional filtering, if necessary, demodulation and/or decoding. Receiver (RX) processing circuitry 125 transmits the processed baseband signal to speaker 130 (i.e., voice data) or to processor 140 for further processing (e.g., web browsing).

Transmitter (TX) processing circuitry 115 receives analog or digital voice data from microphone 120 or other outgoing baseband data (e.g., web data, e-mail, interactive video game data) from processor 140. Transmitter processing circuitry 115 encodes, modulates, multiplexes, and/or digitizes the outgoing baseband data to produce a processed baseband or IF signal. Radio frequency transceiver 110 receives the outgoing processed baseband or IF signal from transmitter processing circuitry 115. Radio frequency transceiver 110 up-converts the baseband or IF signal to a radio frequency signal that is transmitted via antenna 105.

In an advantageous embodiment of the present disclosure, processor 140 is a microprocessor or microcontroller. Memory 160 is coupled to processor 140. According to an advantageous embodiment of the present disclosure, part of memory 160 comprises a random access memory (RAM) and another part of memory 160 comprises a non-volatile memory, such as Flash memory, which acts as a read-only memory (ROM).

Processor 140 executes basic operating system (OS) program 165 stored in memory 160 in order to control the overall operation of mobile station 100. In one such operation, processor 140 controls the reception of forward channel signals and the transmission of reverse channel signals by radio frequency transceiver 110, receiver processing circuitry 125, and transmitter processing circuitry 115, in accordance with well-known principles.

Processor 140 is capable of executing other processes and programs resident in memory 160. Processor 140 can move data into or out of memory 160, as required by an executing process. Processor 140 is also coupled to input/output (I/O) interface 145. I/O interface 145 provides mobile station 100 with the ability to connect to other devices such as laptop computers and handheld computers. I/O interface 145 is the communication path between these accessories and processor 140.

Processor 140 is also coupled to keypad 150 and touchscreen 155. The operator of mobile station 100 uses keypad 150 to enter data into mobile station 100. Display 155 may be a liquid crystal display capable of rendering text and/or at least limited graphics from web sites. Alternate embodiments may use other types of displays.

The advantageous embodiments of the present disclosure provide an improved user interface for identifying character inputs using a scroll bar. Thus, in this illustrated example, memory 160 includes a number of different applications that may use a scroll bar to aid in searching for content. For example, memory 160 includes contacts application 170, audio application 180, video application 190, and message application 196. Memory 160 also includes data for the above listed application in the form of contacts list 175 audio files 185, video files 195, message files 197.

In these illustrative examples, contacts application 170 is software that retrieves and displays information about contacts in contacts list 175. Contacts application 170 may also interface with other components in mobile station 100 allow a user to contact contacts in contacts list 175. Contacts list 175 is a list of information about contacts of a user of mobile station 100. For example, without limitation, contacts list 175 may include the name, phone number, e-mail address, fax number, physical address, picture, and or any other suitable information about an individual.

Audio application 180 is software that retrieves, displays, and/or provides content from audio files 185. Audio files 185 may be music, voice memos, messages, and/or any other type of audio that may be stored in mobile station 100. Video application 190 is software that retrieves, displays, and/or provides content from video files 195. Video files 195 may be pictures, videos, messages, and/or any other type of video or picture content that may be stored in mobile station 100.

Message application 196 is software that retrieves, displays, and/or provides content from message files 197. For example, message application 196 may be a text message application, an e-mail message application and/or any other type of program for exchanging messages. Message files 197 may be e-mails, text messages, chat messages, voice messages and/or any other type of message that may be stored in mobile station 100.

The following discussion describes an exemplary embodiment of the present disclosure implemented in contacts application 170. The following discussion of this exemplary embodiment may implemented in any type of application in mobile station 100 including, for example, without limitation, be implemented in audio application 180, video application 190, message application 196.

In this exemplary embodiment, contacts application 170 includes a scroll bar to assist a user in selecting contacts from contacts 175. For example, the scroll bar may have a plurality of characters associated with different contacts in contacts list 175. The scroll bar is displayed on touchscreen 155. Contacts application 170 detects an input in the form of a touch on touchscreen 155. For example, contacts application 170 may detect a touch on a character in the scroll bar. Then, contacts application 170 will display contacts from contacts list 175. For example, a user may select a letter on the scroll bar and contacts application displays contacts that have that letter as a first letter of a first name or last name.

Advantageously, contacts application 170 also allows a user to search contacts list 175 through the use of a gesture. A gesture is an input into touchscreen 155 that is different than a mere touch. For example, without limitation, the gesture may be a tap, a double tap, a flick event, touching a single portion of a screen for a predetermined amount of time, a drag of a finger in a direction away from the scroll bar, a swipe, and or any other detectable type of touch input.

In this advantageous embodiment, contacts application 170 detects a character associated with the gesture For example, the user may scroll through characters on the scroll bar prior to making the gesture. Contacts application 170 can detect a character on the scroll bar that was last touched by the user prior to the gesture. Contacts application 170 will place the character detected into a search bar. The search bar displays characters to be used in searching contacts list 175.

In these examples, contacts application 170 can detect any number of gestures made on touchscreen 155. Contacts application 170 places characters associated with each gesture into the search bar. Contacts application 170 uses each character placed into the search bar to further limit the search for contacts in contacts list 175.

In different embodiments, different types of gestures can be established to modify characters placed into the search bar. For example, a first type of gesture places a character into the search bar; a second, type of gesture may remove the immediately placed character; and a third type of gesture may remove all characters present in the search bar. The different types of gestures may be flicks or swipes in different directions, different numbers of taps, different periods of times that a touch is held in place, and/or or any other different types of gestures.

In these illustrative examples, a user can also modify characters in the search bar using keypad 150. For example, if a character that is not desired is placed into the search bar as a result of a gesture detected by contacts application 170, the user may remove the character from the search bar using keypad 150. In another example, the user may add the character from the search bar using keypad 150.

In one illustrative example, if a user desires to contact a contact named "Bob" the user may request that contacts application 170 be loaded from memory 160. Processor 140 loads contacts application 170 from memory 160. Contacts application 170 displays a number of contacts from contacts list 175 and a scroll bar. Contacts application 170 detects a touch on a letter "B." Contacts application displays contacts from contacts list 175 that begin with the letter "B" on touchscreen 155. However, in this example, contacts list 175 contains more contacts that that begin with the letter "B" than may be simultaneously displayed on touchscreen 155. As a result, the name "Bob" may not be initially displayed.

However, if contacts application 170 detects gestures for the letters "B" and "O," contacts application 170 will place the letters "B" and "O" into the search bar. Contacts application 170 uses the letters "B" and "O" to limit the contacts displayed on touchscreen 155 to contacts beginning with the letters "B" and "O." As a result, the probability that contacts application 170 will display the name "Bob" on touchscreen 155 increases significantly. The incorporation of gesture detection into contacts application 170 allows users to search for and obtain desired contacts results in a timely fashion.

In other embodiments, gestures made may be utilized for searching for results in any of audio application 180 (e.g., music player, voice recorder), video application 190 (e.g., image viewer, video player), message application 196 (e.g., email, text message, social media messaging). For example, without limitation, gestures made with regard the scroll bar may be made to search for music, voice memos, videos, pictures, subjects of messages, senders of messages, email messages, text messages, and/or any other searchable content contained in contacts list 175 audio files 185, video files 195, message files 197.

The illustration of mobile station 100 is not meant to imply physical or architectural limitations to the manner in which different illustrative embodiments may be implemented. Other components in addition to and/or in place of the ones illustrated may be used. Some components may be unnecessary in some illustrative embodiments. For example, illustrative embodiments of the present disclosure may be implemented in any type of mobile device.

The list of applications presented in FIGURE 1 is for illustration and not intended to be a limitation on applications in which advantageous embodiments of the present disclosure may be applied. For example character entries through gestures made with a scroll bar may be used in any number of different applications. In one example, character entries made with a scroll bar may be used in social networking applications, browser applications, financial applications, television and media applications, and/or any other suitable application utilizing character entries with a scroll bar.

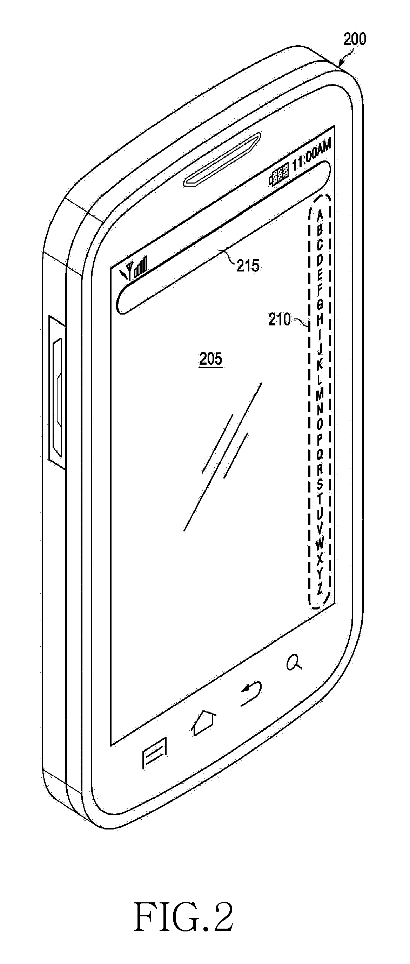

FIGURE 2 illustrates a mobile device having a scroll bar according to an advantageous embodiment of the disclosure. In this advantageous embodiment, mobile device 200 is an example of one implementation of mobile station 100 in FIGURE 1. In this example, mobile device 200 is depicted as a mobile phone. However, advantageous embodiments of the present disclosure may be implemented in any number of devices. For example, without limitation, mobile device 200 may be a smart phone, a cell phone, a tablet computer, an electronic reader, a personal digital assistant, and/or any other suitable mobile electronic device.

Mobile device 200 includes touchscreen 205, scroll bar 210, and search bar 215. Touchscreen 205 is adapted to receive user inputs in the form of touches. Scroll bar 210 displays characters for a user to select in searching items displayed on touchscreen 205. In this example, the characters are letters. However, for example, without limitation, the characters may be numbers, symbols, words, abbreviations, and/or any other list of characters that may be searched.

Characters selected from scroll bar 210 are placed into search bar 215. For example, a user may make a gesture, such as, for example, a flicking motion on touchscreen 205 or tap touchscreen 205, over a character in scroll bar 210. That character may then be placed in search bar 215. An additional gesture allows a user to modify characters present in search bar 215. For example, a different type of gesture, such as for example, a flicking motion in a different direction or a certain number of taps, deletes a previous character placed in search bar 215. In another example, a third type of gesture may delete all characters present in search bar 215. In some embodiments, any number of different gestures may be defined and established for any number of different types of character inputs and modification of characters present in search bar 215.

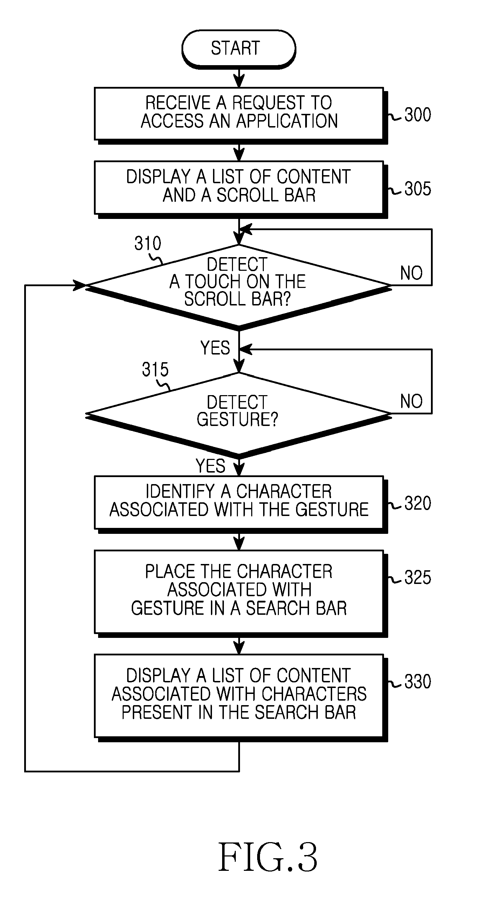

FIGURE 3 illustrates a process for character input using a scroll bar according to an advantageous embodiment of the disclosure. In one illustrative example, the process illustrated in FIGURE 3 may be implemented in mobile station 100. The process may also be implemented by contacts application 170.

The process begins by receiving a request to access an application (block 300). In block 300, for example, the request may come from a user desiring to access a contacts list, an audio file, a video file, or a message. The process then displays a list of content and a scroll bar (block 305). In block 305, the amount of content displayed may be limited by the size of the display screen. Thereafter the process determines whether a touch on the scroll bar has been detected (block 310). If the process determines that a touch on the scroll bar has not been detected, the returns to block 310 and continues to wait for a touch.

If, however the process determines that a touch on the scroll bar has been detected, the process determines whether a gesture has been detected (block 315). In block 315, the gesture may be performed while the user is touching or scrolling with the scroll bar. The gesture may also be performed by a flick event on a touchscreen. If the process determines that a gesture has been not been detected, the returns to block 315 and continues to wait for a gesture.

If, however the process determines that a gesture has been detected, the process identifies a character associated with the gesture (block 320). In block 320, the character associated with the gesture is a character that was touched during the gesture. For example, a user may double tap a character on the scroll bar. In another example, the user may flick over a character on the scroll bar.

The process then places the character associated with the gesture in a search bar (block 325). Thereafter, the process displays a list of content associated with characters present in the search bar (block 330). In block 330, the process may search the list of content to display only the set of content that include characters present in the search bar. Thereafter, the process returns to block 310 and repeats blocks thereafter. For example, the process may wait to detect additional gestures for characters to place in the search bar to further limit the search for content to be displayed. The process may end by a user closing the application. The process may also end by a selection of content by the user.

As will be appreciated by one skilled in the art, aspects of the present disclosure may take the form of a computer program product embodied in one or more computer readable storage medium(s) having program code embodied thereon. A computer readable storage medium may be, for example, without limitation, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. The program code may also be loaded for execution by a processor to provide processes for implementing the blocks, functions, and/or operations described in the present disclosure.

Although the present disclosure has been described with an exemplary embodiment, various changes and modifications may be suggested to one skilled in the art. It is intended that the present disclosure encompass such changes and modifications as fall within the scope of the appended claims.

## Claims

1. An apparatus comprising:
a touchscreen; and
a controller operably connected to the touchscreen, the controller configured to detect a gesture input using the touchscreen, identify a character associated with the gesture, include the character in a set of characters to be displayed in a search bar on the touchscreen, and organize a list of content based on the set of characters.

2. A method for character input using a scroll bar, the method comprising:
detecting a gesture input using a touchscreen;
identifying a character associated with the gesture;
including the character in a set of characters to be displayed in a search bar on the touchscreen; and
organizing a list of content based on the set of characters.

3. A mobile device for use in a wireless communications network, the mobile device comprising:
a touchscreen;
a storage device configured to store an application and a list of content associated with the application; and
a controller operably connected to the touchscreen and the storage device, the controller configured to receive the list of content in response to a request to access the application, detect a gesture input using the touchscreen, identify a character associated with the gesture, include the character in a set of characters to be displayed in a search bar on the touchscreen, and organize the list of content based on the set of characters.

4. The apparatus of Claim 1, the method of Claim 2 and the mobile device of Clai m 3, respectively, and
wherein the gesture is a first gesture
the apparatus is wherein the controller is further configured to detect a second ges ture input using the touchscreen, identify a second character associated with the second g esture, and further organize the list of content based on an order the first and second gestu res were input, and
the method further comprising: detecting a second gesture input using the touchsc reen; identifying a second character associated with the second gesture; and further organ izing the list of content based on an order the first and second gestures were input, and
the mobile device is wherein the controller is further configured to detect a secon d gesture input using the touchscreen, identify a second character associated with the seco nd gesture, and further organize the list of content based on an order the first and second gestures were input.

5. The apparatus of Claim 1 and the method of Claim 2, respectively, and
the apparatus is wherein the controller is further configured to identify a type of t he gesture, and associate the type of the gesture with a request for inclusion of the charact er in the set of characters, and
the method further comprising identifying a type of the gesture; and associating the type of the gesture with a request for inclusion of the character in the set of characters.

6. The apparatus of Claim 5, wherein the gesture is a first gesture, wherein the controller is further configured to detect a second gesture input using the touchscreen, identify a second character associated with the second gesture, identify a type of the second gesture input, and associate the type of the gesture with a request for removal of at least one character from the set of characters.

7. The apparatus of Claim 5, wherein the type of the gesture is identified from one of a flicking motion, a number of taps, and a direction of the flicking motion.

8. The apparatus of Claim 1 and the method of Claim 2, respectively and,
the apparatus is wherein, in organizing the list, the controller is further configured to filter content from the list of content based on the set of characters, and
the method is wherein organizing the list of content comprises: filtering content fr om the list of content based on the set of characters.

9. The apparatus of Claim 1 and The method of Claim 2, respectively and,
the apparatus is wherein, in identifying the character associated with the gesture, t he controller is further configured to identify the character from a list of characters a scrol 1 bar displayed on the touchscreen, and
the method is wherein identifying the character associated with the gesture comprises: identifying the character from a list of characters a scroll bar displayed on the touchscreen.

10. The apparatus of Claim 1, wherein the apparatus is a mobile station in a wireless communications network.

11. The method of Claim 5, wherein the gesture is a first gesture, the method further comprising:
detecting a second gesture input using the touchscreen;
identifying a second character associated with the second gesture;
identifying a type of the second gesture input; and
associating the type of the gesture with a request for removal of at least one charac ter from the set of characters.

12. The method of Claim 5, wherein the type of the gesture is identified from one of a flicking motion, a number of taps, and a direction of the flicking motion.

13. The mobile device of Claim 3, wherein the controller is further configured to identify a type of the gesture, and associate the type of the gesture with a request for inclusion of the character in the set of characters.

14. The mobile device of Claim 13, wherein the gesture is a first gesture, wherein the controller is further configured to detect a second gesture input using the touchscreen, identify a second character associated with the second gesture, identify a type of the second gesture input, and associate the type of the gesture with a request for removal of at least one character from the set of characters.

15. The mobile device of Claim 3, wherein the application is one of a contacts app lication, an audio application, a video application, and a message application and wherein the list of content is one of a contacts list, a list of audio content, a list of image content, and a list of message content.
